(19) **Europäisches Patentamt**
**European Patent Office**
**Office européen des brevets**

(11) **EP 2 916 289 B1**

(12) **EUROPEAN PATENT SPECIFICATION**

(45) Date of publication and mention
of the grant of the patent:
**10.07.2019 Bulletin 2019/28**

(51) Int Cl.:
*G06T 7/33* (2017.01)     *G06T 5/00* (2006.01)

(21) Application number: **15155718.8**

(22) Date of filing: **19.02.2015**

(54) **Image processing apparatus, system, image processing method, and computer-readable storage medium**

Bildverarbeitungsvorrichtung, System, Bildverarbeitungsverfahren und computerlesbares Speichermedium

Appareil de traitement d'image, procédé de traitement d'image et support d'enregistrement lisible sur ordinateur

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.03.2014 JP 2014045448**

(43) Date of publication of application:
**09.09.2015 Bulletin 2015/37**

(73) Proprietor: **Ricoh Company, Ltd.**
**Tokyo 143-8555 (JP)**

(72) Inventors:
• **Kikuchi, Naoki**
  **Tokyo, 143-8555 (JP)**
• **Aoki, Shin**
  **Tokyo, 143-8555 (JP)**
• **Nagao, Kagehiro**
  **Tokyo, 143-8555 (JP)**
• **Kishiwada, Jun**
  **Tokyo, 143-8555 (JP)**

(74) Representative: **SSM Sandmair**
**Patentanwälte Rechtsanwalt**
**Partnerschaft mbB**
**Joseph-Wild-Straße 20**
**81829 München (DE)**

(56) References cited:
**US-A1- 2013 004 059**

• **MOSHFEGHI M ET AL: "THREE-DIMENSIONAL ELASTIC MATCHING OF VOLUMES", IEEE TRANSACTIONS ON IMAGE PROCESSING, IEEE SERVICE CENTER, PISCATAWAY, NJ, US, vol. 3, no. 2, 1 March 1994 (1994-03-01), pages 128-138, XP000440621, ISSN: 1057-7149, DOI: 10.1109/83.277895**
• **YANAGISAWA M ET AL: "REGISTRATION OF LOCALLY DISTORTED IMAGES BY MULTIWINDO PATTERN MATCHING AND DISPLACEMENT INTERPOLATION: THE PROPOSAL OF AN ALGORITHM AND ITS APPLICATION TO DIGITAL SUBTRACTION ANGIOGRAPHY", PROCEEDINGS OF THE CONFERENCE ON PATTERN RECOGNITION. MONTREAL, JULY 30 - AUG. 2, 1984; [PROCEEDINGS OF THE CONFERENCE ON PATTERN RECOGNITION], SILVER SPRINGS, IEEE. COMP. SOC PRESS, US, vol. CONF. 7, 30 July 1984 (1984-07-30), pages 1288-1291, XP000615699,**
• **PHAM T Q ET AL: "Robust fusion of irregularly sampled data using adaptive normalized convolution", EURASIP JOURNAL ON EMBEDDED SYSTEMS, HINDAWI PUBLISHING CORPORATION, NEW YORK, NY, US, vol. 2006, 1 January 2006 (2006-01-01), pages 1-12, XP002539622, ISSN: 1687-3955, DOI: 10.1155/ASP/2006/83268**

**Description**

FIELD OF THE INVENTION

The present invention relates to an image processing apparatus, a system, an image processing method, and a computer-readable storage medium.

BACKGROUND OF THE INVENTION

A subject to be imaged by, for example, a camera is imaged in a distorted state due to the effect of a lens and the like. As a correction technique to remove the distortion, a correction scheme based on a polynomial such as affine transform has already been known. Moreover, for example, a correction scheme based on a lookup table (LUT) in which a correction amount is associated with each pixel (for each coordinate position of a captured image) has also been known (Japanese Laid-open Patent Publication No. 2005-292080).

However, in the correction scheme based on a polynomial such as affine transform, it has rarely been able to optimize an entire image with correction of the polynomial, and the accuracy of correction has not been sufficient. Furthermore, a lot of calculations by polynomials are required, and there has been a problem that computation cost increases. Furthermore, in the correction scheme based on a lookup table in which a correction amount is associated with each pixel, the number of patterns representing correction amounts increases when a correction amount range is large, or when correction interval is set small to increase accuracy in correction, and therefore, the amount of data in the lookup table increases. As a result, a required memory capacity to hold the lookup table increases to cause a problem that manufacturing cost increases.

Therefore, there is a need for an image processing apparatus, a system, an image processing method, and a computer-readable recording medium having a computer program that can correct misregistration in an entire image region at high accuracy and reduce a memory capacity used in the misregistration correction.

Publication MOSHFEGHI M ET AL: "THREE-DIMENSIONAL ELASTIC MATCHING OF VOLUMES", IEEE TRANSACTIONS ON IMAGE PROCESSING, IEEE SERVICE CENTER, PISCATAWAY, NJ, US, vol 3, No. 2, 1 March 1994 (1994-03-01), pages 128-138, ISSN: 1057-7149, DOI: 10.1109/83.277895 describes the three-dimensional elastic matching of volumes.

Publication YANAGISAWA M ET AL: "REGISTRATION OF LOCALLY DISTORTED IMAGES BY MULTIWINDOW PATTERN MATCHING AND DISPLACEMENT INTERPOLATION: THE PROPOSAL OF AN ALOGORITHM AND ITS APPLICATION TO DIGITAL SUBTRACTION ANGIOGRAPHY", proceedings of the conference on pattern recognition. MONTREAL, JULY 30 - AUG. 2, 1984; [PROCEEDINGS OF THE CONFERENCE ON PATTERN RECOGNITION], SILVER SPRINGS, IEEE. COMP. SOC PRESS, US, vol. CONF. 7, 30 July 1984 (1984-07-30), pages 1288-1291, describes the registration of locally distorted images by multiwindow pattern matching and displacement interpolation. In this respect, an algorithm and its application to digital subtraction angiography is described.

US 2013/004059 A1 describes systems, methods, and computer-readable and executable instructions for aligning stereoscopic images. Aligning stereoscopic images can include applying, by a computer, a feature detection technique to a pair of stereoscopic images to detect a number of features in each stereoscopic image. Aligning stereoscopic images can also include creating, by the computer, a feature coordinate list for each stereoscopic image based on the feature detection and comparing, by the computer, the feature coordinate lists. Furthermore, aligning stereoscopic images can include aligning the stereoscopic images, by the computer, based on the comparison.

SUMMARY OF THE INVENTION

The invention is defined by the subject-matter of the independent claims. The dependent claims are directed to advantageous embodiments.

ADVANTAGES OF THE INVENTION

Advantageously,
the problems in the conventional technology are at least partially solved.
Advantageously, an image processing apparatus includes the features of claim 1.
Advantageously, there is provided a system that includes a camera; and an image processing apparatus as claimed in any one of claims 1 to 4.
Advantageously, there is provided an image processing method that includes the features of claim 6.
Advantageously, there is provided a computer-readable storage medium with an executable program stored thereon, according to claim 7.

The above and other features, advantages and technical and industrial significance of this invention will be better understood by reading the following detailed description of presently preferred embodiments of the invention, when considered in connection with the accompanying drawings.

BRIEF DESCRIPTION OF THE DRAWINGS

FIG. 1 is a diagram illustrating one example of a configuration of a system according to an embodiment;
FIG. 2 is a diagram illustrating one example of a functional configuration of an image-correction processing unit;
FIG. 3 is a diagram illustrating one example of second correspondence data;
FIG. 4 indicates one example of blocks that are acquired by dividing a captured image;
FIG. 5 is a diagram illustrating a flow when a first correspondence data is generated;
FIG. 6 is a diagram for explaining a modification;
FIG. 7 is a diagram for explaining an effect of the embodiment;
FIG. 8 is a schematic diagram indicating a case in which one coordinate position is close to vertex positions of four vertexes;
FIG. 9 is a schematic diagram indicating a case in which one coordinate position is close to a vertex position of one vertex;
FIG. 10 is a schematic diagram indicating a case in which one coordinate position is close to vertex positions of two vertexes; and
FIG. 11 is a diagram illustrating one example of a configuration of a system of a modification.

DETAILED DESCRIPTION OF THE PREFERRED EMBODIMENTS

An embodiment of the present invention will be explained in detail below with reference to the accompanying drawings.

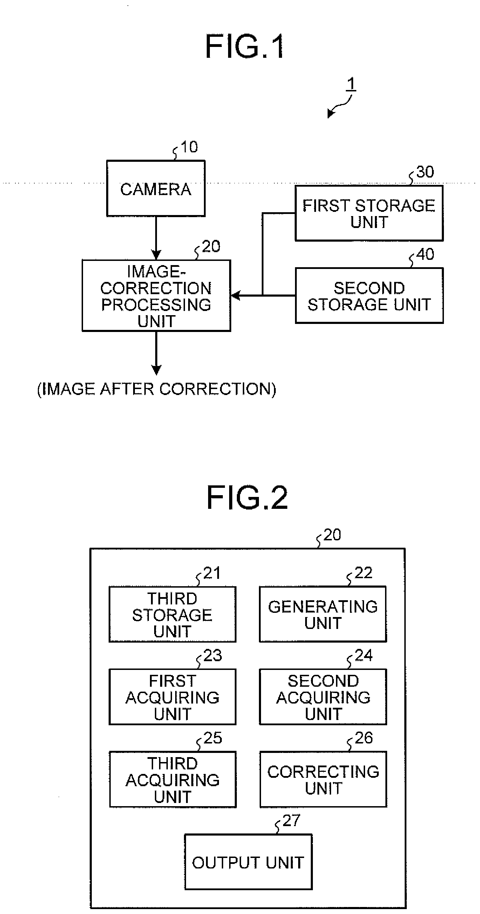

FIG. 1 is a diagram illustrating one example of a configuration of a system 1 according to a present embodiment. As illustrated in FIG. 1, the system 1 includes a camera 10, an image-correction processing unit 20, a first storage unit 30, and a second storage unit 40.
The camera 10 has a function of imaging an imaging subject (subject) to which a lens is directed. In this description, "imaging" indicates converting an image of a subject (imaging subject) that is formed by an optical system such as a lens into an electric signal.
The image-correction processing unit 20 has a function of correcting (calibrating) coordinate positions in an image (also referred to as "captured image" in the following explanation) acquired by imaging by the camera 10. The image-correction processing unit 20 is specifically explained below. In this example, it can be regarded that the image-correction processing unit 20 corresponds to an "image processing apparatus" in claims.
FIG. 2 is a diagram illustrating one example of a functional configuration of the image-correction processing unit 20. As illustrated in FIG. 2, the image-correction processing unit 20 includes a third storage unit 21, a generating unit 22, a first acquiring unit 23, a second acquiring unit 24, a third acquiring unit 25, a correcting unit 26, and an output unit 27.
The third storage unit 21 stores second correspondence data containing second correction amounts respectively associated with coordinate positions in a captured image. The second correction amount indicates a difference between a coordinate position and a target position indicating an ideal position that does not cause distortion in a captured image. The second correspondence data can be generated using various kinds of widely known techniques.
The generating unit 22 calculates a correction equation to correct a coordinate position of a captured image (equation to correct a coordinate position of a captured image to a position close to a target position) based on the second correspondence data stored in advance in the third storage unit, and generates first correspondence data containing first misregistration amounts respectively associated with unit regions (also referred to as "blocks" in the following explanation) that are acquired by dividing a captured image into sizes of at least one pixel each. The first misregistration amount indicates an amount of misregistration that cannot be corrected by correction using the correction equation. Specific explanation is given below.

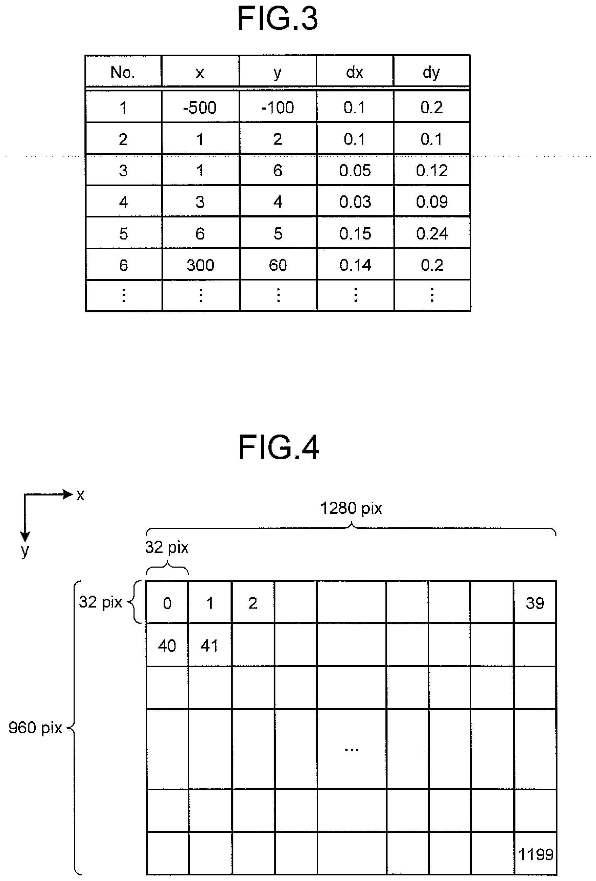

FIG. 3 is a diagram illustrating one example of the second correspondence data that is stored in advance in the third storage unit 21. In the example illustrated in FIG. 3, "x" indicates a coordinate position in a horizontal direction (hereinafter, also referred to as "x direction") of a captured image, "y" indicates a coordinate position in a vertical direction of a captured image (hereinafter, also referred to as "y direction"), "dx" indicates a second correction amount in the x direction, and "dy" indicates a second correction amount in the y direction. The origin point to be a reference of a coordinate position can be arbitrarily set, and for example, a center (center of gravity) of a captured image can be set as the origin point, or an upper left position or a lower left position can be set as the origin point.

In the example illustrated in FIG. 3, a coordinate position (x, y) identified by No. "1" is (-500, -100), and a second correction amount (dx, dy) associated with this coordinate position is (0.1, 0.2). Moreover, a coordinate position (x, y) identified by No. "2" is (1, 2), and a second correction amount (dx, dy) associated with this coordinate position is (0.1, 0.1). Furthermore, a coordinate position (x, y) identified by No. "3" is (1, 6), and a second correction amount (dx, dy) associated with this coordinate position is (0.05, 0.12). Moreover, a coordinate position (x, y) identified by No. "4" is (3, 4), and a second correction amount (dx, dy) associated with this coordinate position is (0.03, 0.09). Furthermore, a coordinate position (x, y) identified by No. "5" is (6, 5), and a second correction amount (dx, dy) associated with this coordinate position is (0.15, 0.24). Moreover, a coordinate position (x, y) identified by No. "6" is (300, 60), and a second correction amount (dx, dy) associated with this coordinate position is (0.14, 0.2).

The generating unit 22 calculates, using the second correspondence data exemplified in FIG. 3, a correction equation to correct a coordinate position of a captured image to a position close to a target position by a predetermined polynomial approximation applying the least-square method. The correction equation in this example can be expressed by Equation (1) below.

$$x' = 0.08 + 1.02 \times x - 0.01 \times y$$
$$y' = 0.04 + 0.02 \times x - 1.01 \times y$$

$$(1)$$

In above Equation (1), x' indicates a position after correcting a coordinate position x in the x direction using the correction equation, and y' indicates a position after correcting a coordinate position y in the y direction using the correction equation. It can be regarded that a misregistration amount (also referred to as "second misregistration amount" in the following explanation) indicating a difference (x' - x) between the coordinate position x and the position x' after correction using the correction equation expresses a correction amount in the x direction calculated using the correction equation. Similarly, it can be regarded that a second misregistration amount indicating a difference (y' -y) between the coordinate position y and the position y' after correction using the correction equation expresses a correction amount in the y direction calculated using the correction equation. The generating unit 22 stores coefficients of the correction equation calculated as above in the first storage unit 30 illustrated in FIG. 1 as correction parameters.

After calculation of the correction equation, the generating unit 22 generates the first correspondence data containing first misregistration amounts respectively associated with each of blocks that are acquired by dividing a captured image into sizes of at least 1 pixel each. The first misregistration amount indicates an amount of misregistration that cannot be corrected by correction using the correction equation described above. In the present embodiment, the size of each block is the size including a plurality of pixels. More specifically, the size of each block is 32×32 pixels (32 pixels in the x direction and 32 pixels in the y direction) (1 pixel = size of a single pixel). In this example, as illustrated in FIG. 4, it is assumed that the size of the entire captured image is 1280×960 pixels (1280 pixels in the x direction and 960 pixels in the y direction). When dividing the acquired image into blocks in the size of 32×32 pixels (32 pixels in the x direction and 32 pixels in the y direction), 40×30 blocks (40 blocks in the x direction and 30 blocks in the y direction) = 1200 blocks are acquired.

The generating unit 22 generates the first correspondence data containing the first misregistration amounts respectively associated with the blocks acquired as described above. In this example, the first misregistration amount associated with one block is expressed by a mean value of first misregistration amounts corresponding to respective coordinate positions of pixels included in the block. For example, it is assumed that the coordinate positions (x, y) identified by No. "2" to No. "5" illustrated in FIG. 3 are included in one block. In this case, the generating unit 22 calculates a first misregistration amount corresponding to each of the coordinate positions (x, y) identified by No. "2" to No. "5" illustrated in FIG. 3, and associates a mean value thereof with the block including the coordinate positions (x, y) identified by No. "2" to No. "5" illustrated in FIG. 3.

First, a calculation method of the first misregistration amount of the coordinate position x in the x direction of the coordinate position (x, y) that is identified by No. "2" illustrated in FIG. 3 is explained. When the coordinate position (x = 1) in the x direction and the coordinate position (y = 2) in the y direction are substituted in Equation (1) above, the position x' after correction by the correction equation is 0.08 + 1.02×1 - 0.01×2 = 1.08. The second misregistration amount described above (x' - x) is 1.08 - 1 = 0.08. As illustrated in FIG. 3, because the second correction amount dx (difference between the coordinate position x and the target position) = 0.1 that is associated with the coordinate position (x, y) identified by No. "2", the first misregistration amount indicating an amount of misregistration that cannot be corrected by correction using the correction equation can be calculated as 0.1 - 0.08 = 0.02.

Next, a calculation method of the first misregistration amount of the coordinate position x in the x direction of the coordinate position (x, y) that is identified by No. "3" illustrated in FIG. 3 is explained. When the coordinate position (x = 1) in the x direction and the coordinate position (y = 6) in the y direction are substituted in Equation (1) above, the position x' after correction by the correction equation is 0.08 + 1.02×1 - 0.01×6 = 1.04. The second misregistration amount described above (x' - x) is 1.04 - 1 = 0.04. As illustrated in FIG. 3, because the second correction amount dx = 0.05 that is associated with the coordinate position (x, y) identified by No. "3", the first misregistration amount indicating an amount of misregistration that cannot be corrected by correction using the correction equation can be calculated as 0.05 - 0.04 = 0.01.

Subsequently, a calculation method of the first misregistration amount of the coordinate position x in the x direction of the coordinate position (x, y) that is identified by No. "4" illustrated in FIG. 3 is explained. When the coordinate position (x = 3) in the x direction and the coordinate position (y = 4) in the y direction are substituted in Equation (1) above, the position x' after correction by the correction equation is 0.08 + 1.02×3 - 0.01×4 = 3.1. The second misregistration amount described above (x' - x) is 3.1 - 3 = 0.1. As illustrated in FIG. 3, because the second correction amount dx = 0.03 that is associated with the coordinate position (x, y) identified by No. "4", the first misregistration amount indicating an amount of misregistration that cannot be corrected by correction using the correction equation can be calculated as 0.03 - 0.1 = -0.07.

Next, a calculation method of the first misregistration amount of the coordinate position x in the x direction of the coordinate position (x, y) that is identified by No. "5" illustrated in FIG. 3 is explained. When the coordinate position (x = 6) in the x direction and the coordinate position (y = 5) in the y direction are substituted in Equation 1 above, the position x' after correction by the correction equation is 0.08 + 1.02×6 -0.01×5 = 6.15. The second misregistration amount described above (x' - x) is 6.15 - 6 = 0.15. As illustrated in FIG. 3, because the second correction amount dx = 0.15 that is associated with the coordinate position (x, y) identified by No. "5", the first misregistration amount indicating an amount of misregistration that cannot be corrected by correction using the correction equation can be calculated as 0.15 - 0.15 = 0.00.

The generating unit 22 calculates a mean value of the first misregistration amounts of the coordinate positions x in the x direction of the coordinate positions (x, y) identified by No. "2" to No. "5" illustrated in FIG. 3 ((0.02 + 0.01 - 0.07 + 0.00)/4 = -0.01) as the first misregistration amount in the x direction that is associated with the block including the coordinate positions (x, y) identified by No. "2" to No. "5". The first misregistration amount in the y direction associated with the block can also be calculated in a similar manner. As described above, the generating unit 22 generates the first correspondence data containing the first misregistration amounts respectively associated with blocks, and stores the generated first correspondence data in the second storage unit 40 illustrated in FIG. 1.

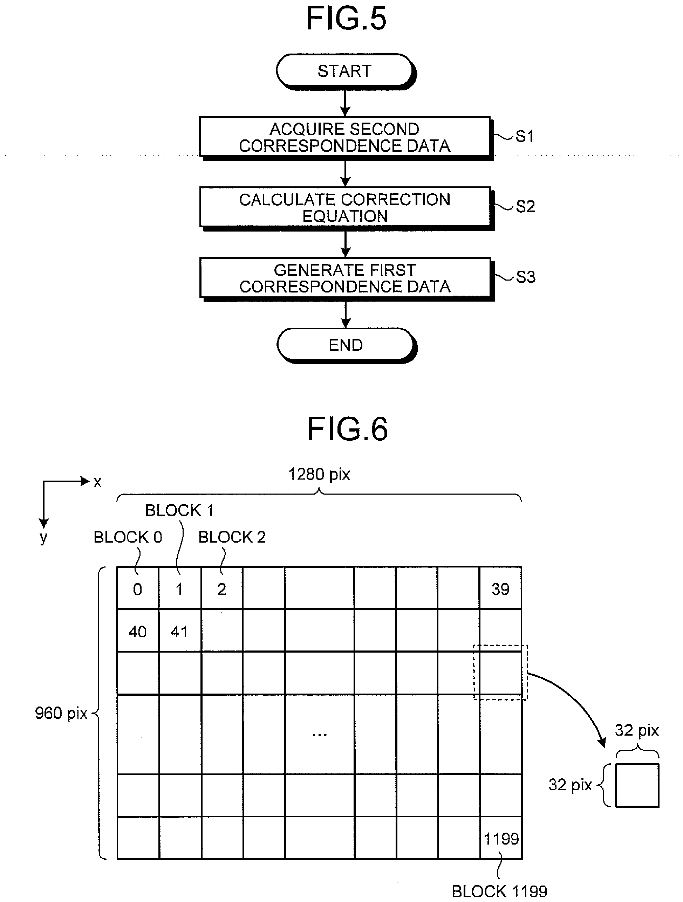

FIG. 5 is a diagram illustrating a flow when the first correspondence data is generated. First, the generating unit 22 acquires the second correspondence data from the third storage unit 21 (step S1). Next, the generating unit 22 calculates a correction equation based on the second correspondence data acquired at step S1 (step S2), and stores coefficients of the calculated correction equation in the first storage unit 30 as correction parameters. Subsequently, the generating unit 22 generates the first correspondence data containing the first misregistration amounts, each of which indicating an amount of misregistration that cannot be corrected by correction by the correction equation calculated at step S2, so as to be associated with the respective blocks described above that are acquired by dividing a captured image (step S3), and stored the generated first correspondence data in the second storage unit 40.

Explanation is continued referring back to FIG. 2. The first acquiring unit 23 acquires a captured image from the camera 10. The second acquiring unit 24 acquires the first misregistration amounts that are respectively associated with the unit regions (blocks) acquired by dividing the captured image into sizes of at least one pixel each. In the present embodiment, the second acquiring unit 24 acquires the first correspondence data from the second storage unit 40, and transfers the acquired first correspondence data to the correcting unit 26. The third acquiring unit 25 acquires correction parameters (in a way, it can be regarded as information indicating the correction equation) indicating coefficients of the correction equation from the first storage unit 30, and transfers the acquired correction parameters (correction equation) to the correcting unit 26.

The correcting unit 26 corrects a coordinate position based on the second misregistration amount indicating a difference between the coordinate position in a captured image and a position after correcting the coordinate position using the correction equation described above, and on the first misregistration amount that is associated with the unit region (block) including the coordinate position. The correcting unit 26 performs the above correction for each of coordinate positions in the captured image. Moreover, in the present embodiment, the correcting unit 26 calculates the first correction amount to correct the coordinate position by adding the second misregistration amount corresponding to the coordinate position in the captured image and the first misregistration amount that is associated with the block including the coordinate position.

In the following, specific explanation is given focusing on one coordinate position. The correcting unit 26 acquires the second misregistration amount (in each of the x direction and the y direction) that indicates a difference between the coordinate position and a position after correcting the coordinate position using a correction equation that is derived from the correction parameters acquired by the third acquiring unit 25. A block in which the coordinate position is included is then identified, and the first misregistration amount is acquired (for each of the x direction and the y direction) that is associated with the identified block by referring to the first correspondence data acquired by the second acquiring unit 24, By adding the second misregistration amount and the first misregistration amount acquired as described above, the first correction amount is calculated (for each of the x direction and the y direction). The correcting unit 26 performs correction in which the coordinate position in the x direction and the coordinate position in the y direction of the subject coordinate position are shifted by the respective calculated first correction amounts.

As one example, a calculation method of the first correction amount to correct the coordinate position x in the x direction of the coordinate position $(x, y) = (1, 2)$ that is identified by No. "2" illustrated in FIG. 3 is explained. The correcting unit 26 derives the correction equation expressed by above Equation (1) from the correction parameters that are acquired by the third acquiring unit 25, and then substitutes the coordinate position in the x direction ($x = 1$) and the coordinate position in the y direction ($y = 2$) in the correction equation. Thus, the position $x' = 0.08 + 1.02 \times 1 - 0.01 \times 2 = 1.08$ after correction by the correction equation is acquired, and therefore, the second misregistration amount ($x' - x$) corresponding to the coordinate position x is $1.08 - 1 = 0{,}08$. In this example, it is assumed that the coordinate positions $(x, y)$ identified by No. "2" to No. "5" illustrated in FIG. 3 are included in the same block, and the first misregistration amount of the x direction associated with the block is -0,01. The correcting unit 26 can calculate the first correction amount ($= 0.07$) by adding the first misregistration amount ($= -0.01$) in the x direction associated with the block including the coordinate position $(x, y)$ identified by No. "2" and the second misregistration amount ($= 0.08$) corresponding to the coordinate position x in the x direction. The first correction amount can be calculated in a similar manner for the coordinate position y in the y direction and other coordinate positions.

Explanation of FIG. 2 is continued. The output unit 27 outputs the captured image (in the following explanation, also referred to as "image after correction") on which correction has been performed by the correcting unit 26. Although the form of output is arbitrarily chosen, for example, the output unit 27 may take a form of transmitting the image after correction to an external device (not illustrated) such as a memory.

In the present embodiment, the image-correction processing unit 20 explained above is configured with a computer device that includes a central processing unit (CPU), a storage unit such as a read only memory (ROM) and a random access memory (RAM), and a communication interface (IF) to communicate with the camera 10 and the like, and functions of the respective components described above (the generating unit 22, the first acquiring unit 23, the second acquiring unit 24, the third acquiring unit 25, the correcting unit 26, and the output unit 27) of the image-correction processing unit 20 are implemented by executing a program that is stored in a storage device by the CPU. It is not limited thereto, and for example, at least a part of the function of the respective components of the image-correction processing unit 20 described above may be implemented by a dedicated hardware circuit (for example, a semiconductor integrated circuit, or the like). Moreover, the third storage unit 21 described above can be implemented by, for example, a ROM, an external storage device (for example, a hard disk drive (HDD)), or the like.

Moreover, for example, a form in which the first storage unit 30 and the second storage unit 40 described above are equipped in the image-correction processing unit 20 can be taken. Furthermore, for example, a form in which the third storage unit 21 and the generating unit 22 described above are equipped in a separate device from the image-correction processing unit 20 can be taken. In either form, it is regarded that a device in which at least the first acquiring unit 23, the second acquiring unit 24, the third acquiring unit 25, and the correcting unit 26 are equipped corresponds to the "image processing apparatus" in claims.

As explained above, the image-correction processing unit 20 of the present embodiment acquires the first misregistration amounts that are respectively associated with the blocks acquired by dividing a captured image into predetermined sizes (in this example, the size including a plurality of pixels), and the correction parameters that indicate coefficients of the correction equation. Based on the second misregistration amount that indicates a difference between a coordinate position in the captured image and a position after correcting the coordinate position using the correction equation derived from the acquired correction parameters, and based on the first misregistration amount that is associated with a block including the coordinate position, the coordinate position is corrected. By performing the above correction for each of coordinate positions in the captured image, misregistration correction of an entire image can be achieved at high accuracy, and a memory capacity used in the misregistration correction can be reduced.

For a comparison example, a configuration in which correction is performed by using only a lookup table is assumed. Assuming that there is a possibility of correcting up to $\pm 40$ pixels, and that a correction unit is 0.1 pixels. This lookup table stores in an associated manner, for each of blocks (1220 blocks; 40 blocks in the x direction and 30 blocks in the y direction) that are acquired by dividing a captured image into blocks (32 pixels in the x direction and 32 pixels in the y direction), a mean value (in the following explanation, also referred to as "amount to be corrected") of the second correction amounts (differences between coordinate positions and target positions) that correspond to coordinate positions included in the block in one to one correspondence. The lookup table stores, for each of blocks, an amount to be corrected of the block (amounts to be corrected in both of the x direction and the y direction) in an associated manner. For example, for a block 0 illustrated in FIG. 6, "28.5" is associated to be stored as an amount to be corrected in the x direction (or in the y direction); for a block 1, "29.2" is associated to be stored as an amount to be corrected in the x direction (or in the y direction); for a block 2, "30.8" is associated to be stored as an amount to be corrected in the x direction (or in the y direction); and for a block 1199, "-28.0" is associated to be stored as an amount to be corrected in the x direction (or in the y direction).

In this example, because the lookup table is required to store values of -40.0 to +40.0 in a block unit, the number of possible patterns in 0.1 steps (-40.0, -39.9, -39.8, -39.7, ..., +39.9, +40.0) becomes 801. To express 801 patterns, data of at least 10 bits is required ($2^9 < 801 < 2^{10}$), and therefore, to express an amount to be corrected in each of the x direction and the y direction, data of 10 bits each is required. As described above, because the total number of blocks is 1200, data of $1200 \times 10 \times 2 = 24000$ bits is required as the entire lookup table. Accordingly, to hold this lookup table, a memory capacity of 24000 bits = 3000 bytes is required.

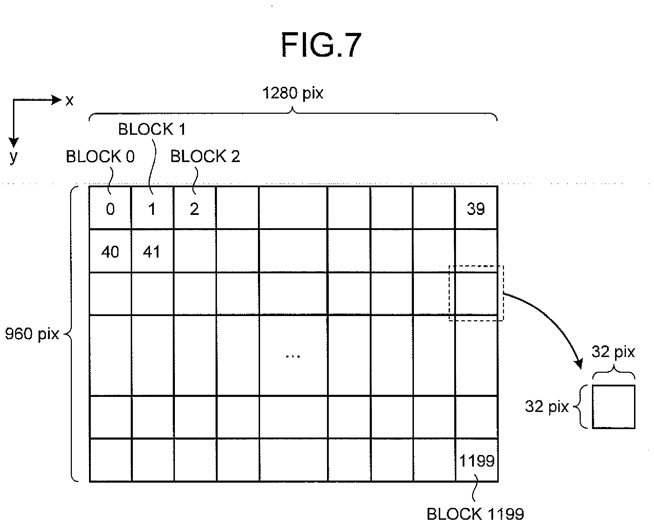

In contrast to this, the first correspondence data (lookup table) in the present embodiment, the first misregistration amount (in the following explanation, also referred to as "deficient correction amount") indicating an amount of misregistration that cannot be corrected by correction using a correction equation is stored so as be associated with the corresponding block, and therefore, for example, for a block 0 illustrated in FIG. 7, "0.1" is associated to be stored as a deficient correction amount; for a block 1, "0.2" is associated to be stored as a deficient correction amount; for a block 2, "0.8" is associated to be stored as a deficient correction amount; and for a block 1199, "-0.2" is associated to be stored as a deficient correction amount. Because rough correction has been performed using the correction equation, a range of data that is stored in a block unit in the first correspondence data is to be small compared to the comparison example. If it is assumed that it is sufficient with $\pm 1$ pixel, the number of possible patterns in 0.1 steps (-1.0, -0.9, -0.8, -07, ..., +0.9, +1.0) is 21. To express 21 patterns, data of at least 5 bits is required ($2^4 < 21 < 2^5$), and therefore, to express a deficient correction amount in each of the x direction and the y direction in a block unit, data of 5 bits each is required. As described above, because the total number of blocks is 1200, data of $1200 \times 5 \times 2 = 12000$ bits is required as the entire first correspondence data. Accordingly, a memory capacity required to hold this first correspondence data is 12000 bits = 1500 bytes, and it is only a half of the comparison example.

Although the size of each block into which a captured image is divided is a size including a plurality of pixels in the embodiment described above, it is not limited thereto, and the size of each block may be, for example, a size of a single pixel (= size of 1 pixel). The point is that each block (unit region) is only required to be one acquired by dividing a captured image into sizes of at least 1 pixel each. In this case, a required memory capacity to hold the lookup table in the comparison example is $1280 \times 960 \times 2 \times 10 = 24576000$ bits = 3072000 bytes (approximately 3 megabytes (MB)). In contrast, a required memory capacity to hold the first correspondence data in the embodiment described above is $1280 \times 960 \times 2 \times 5 = 12288000$ bits = 1536000 bytes (approximately 1.5 MB), and a memory amount of approximately 1.5 MB can be reduced. According to the present embodiment, the first correspondence data is prepared in which the first misregistration amount (deficit correction amount) indicating an amount of misregistration that cannot be corrected by correction using the correction equation is associated with each corresponding block. Therefore, although a memory capacity that is required to hold the first correspondence data itself increases as the size of blocks decreases, the reduced amount in the memory capacity increases compared to the comparison example.

Although the embodiment according to the present invention has been explained above, the present invention is not limited to the embodiment described above as it is, and the components can be modified within a range not departing from the gist thereof to embody the present invention at a practical phase. Moreover, by appropriately combining multiple components disclosed in the embodiment described above, various kinds of invention can be formed. For example, some components can be removed from all of the components indicated in the embodiment.

Modification 1

For example, the second acquiring unit 24 may acquire the first misregistration amounts that are respectively associated with vertex positions in a unit region (block). More specifically, the above first correspondence data that is acquired by the second acquiring unit 24 may be data in which the first misregistration amounts are respectively associated with vertex positions in each block. As one example, a center position (center of gravity) of each block illustrated in FIG. 4 can be regarded as a new vertex position of the block, and the first misregistration amount is associated with the vertex position; however it is not limited thereto.

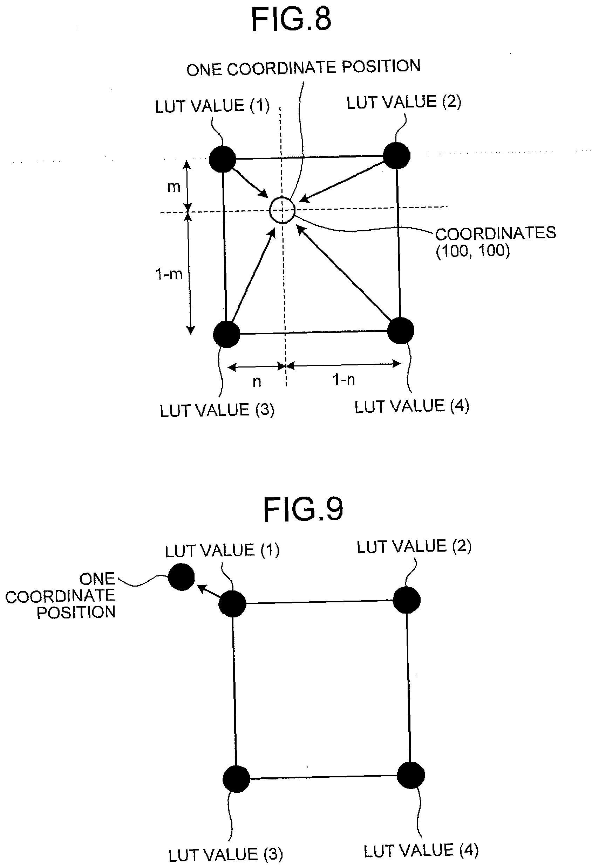

Then, the correcting unit 26 may correct a coordinate position using the first misregistration amounts associated with vertex positions of one to four vertexes close to the coordinate position in a captured image, based on a third misregistration amount indicating a misregistration amount that has been acquired by performing linear interpolation according to distances between the coordinate position and the vertex positions of one to four vertexes that are close to the coordinate position. The correcting unit 26 can perform the above correction for each of multiple coordinate positions in a captured image. For example, as illustrated in FIG. 8, a case in which one coordinate position is close to (surrounded by) four vertex positions is assumed. It can be considered that one coordinate position being close to a vertex position corresponds to a case in which a distance between the coordinate position and the vertex position is equal to or smaller than a threshold. In the example in FIG. 8, for convenience of explanation, the first misregistration amount that is associated with a vertex position at the upper left of one coordinate position is expressed as LUT value (1), the first misregistration amount that is associated with a vertex position at the upper right thereof is expressed as LUT value (2), the first misregistration amount that is associated with a vertex position at the lower left thereof is expressed as LUT value (3), and the first misregistration amount that is associated with a vertex position at the lower right thereof is expressed as LUT value (4).

In this case, the correcting unit 26 calculates the third misregistration amount by performing linear interpolation according to a distance between the coordinate position and each of the vertex position corresponding to LUT value (1), the vertex position corresponding to LUT value (2), the vertex position corresponding to LUT value (3), and the vertex position corresponding to LUT value (4), using LUT value (1), LUT value (2), LUT value (3), and LUT value (4). For example, the third misregistration amount can be calculated also by using Equation (2) below.

$$\text{The third misregistration amount}$$
$$= \text{LUT value}(1) \times (1-m) \times (1-n) + \text{LUT value}(2) \times (1-m) \times (n) \qquad (2)$$
$$+ \text{LUT value}(3) \times (m) \times (1-n) + \text{LUT value}(4) \times (m) \times (n)$$

Similarly to the embodiment described above, the correcting unit 26 can calculate the first correction amount to correct the coordinate position by acquiring the second misregistration amount that indicates a difference between the coordinate position and a position after correcting the coordinate position with the correction equation that is derived from the correction parameters acquired by the third acquiring unit 25, and by adding the acquired second misregistration amount and the third misregistration amount.

Next, for example as illustrated in FIG. 9, it is assumed that one coordinate position is close to one vertex position. In the example in FIG. 9, a vertex position being associated with LUT value (1) is assumed to be close to the coordinate position. In this example, the correcting unit 26 calculates LUT value (1) as the third misregistration amount corresponding to the coordinate position. In this case, in above Equation (2), m = 0, and n = 0. Similarly to the embodiment described above, the correcting unit 26 can calculate the first correction amount to correct the coordinate position, by acquiring the second misregistration amount that indicates a difference between the coordinate position and a position after correcting the coordinate position by using the correction equation derived from the correction parameters that are acquired by the third acquiring unit 25, and by adding the acquired second misregistration amount and the third misregistration amount.

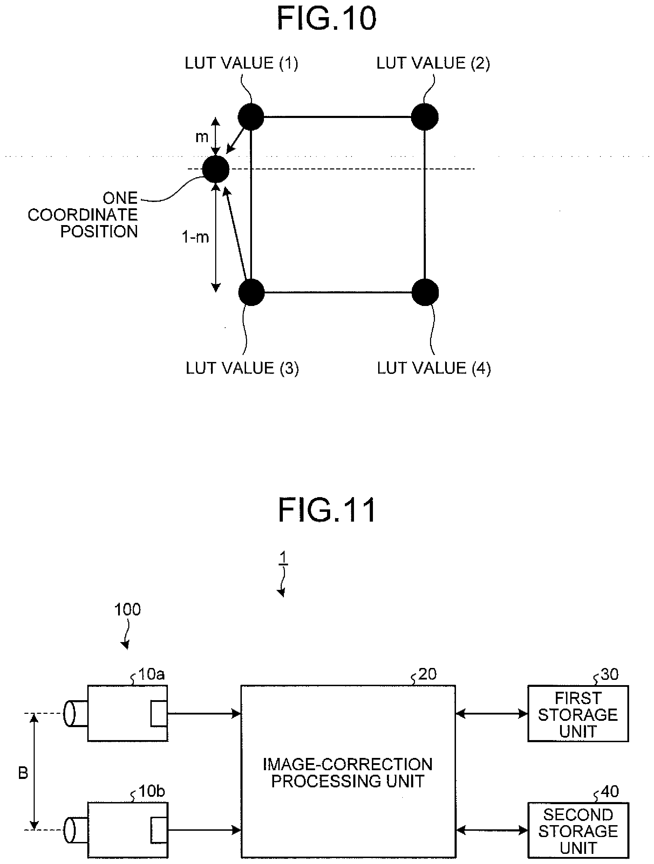

Next, for example, as illustrated in FIG. 10, it is assumed that one coordinate position is close to two vertex positions. In the example in FIG. 10, it is assumed that a vertex position that is associated with LUT value (1) and a vertex position that is associated with LUT value (3) are close to the coordinate position. In this example, the correcting unit 26 calculates the third misregistration amount by performing linear interpolation according to a distance between the coordinate position and each of the vertex position associated with LUT value (1) and the vertex position associated with LUT value (3), using LUT value (1) and LUT value (3). In this case, in above Equation (2), n = 0. Similarly to the embodiment described above, the correcting unit 26 can calculate the first correction amount to correct the coordinate position, by acquiring the second misregistration amount that indicates a difference between the coordinate position and a position after correcting the coordinate position by using the correction equation derived from the correction parameters that are acquired by the third acquiring unit 25, and by adding the acquired second misregistration amount and the third misregistration amount.

Modification 2

For example, as illustrated in FIG. 11, the system 1 may be configured to include a stereo camera 100, the image-correction processing unit 20, the first storage unit 30, and the second storage unit 40. Although the stereo camera 100 includes a pair of a first camera 10a and a second camera 10b that are arranged keeping a predetermined distance (base length) B from each other in the horizontal direction in the example in FIG. 11, it is not limited thereto, and for example, the number of cameras included in the stereo camera 100 may be three or more.

In this example, the third storage unit 21 stores the second correspondence data for the first camera 10a (data in which the second correction amount indicating a difference between a coordinate position and a target position indicating an ideal position to acquire ideal parallax is associated with each of coordinate positions in a captured image that is acquired by imaging by the first camera 10a) and the second correspondence data for the second camera 10b (data in which the second correction amount indicating a difference between a coordinate position and a target position indicating an ideal position to acquire ideal parallax is associated with each of coordinate positions in a captured image that is acquired by imaging by the second camera 10b) independently. A method of generating each of the second correspondence data of the first camera 10a and the second correspondence data of the second camera 10b is arbitrarily determined, and for example, the data can be generated by imaging a subject (chart) a distance to which is known with the first camera 10a or with the second camera 10b, and by associating a target position to acquire appropriate parallax according to a distance with each of coordinate positions that correspond to characteristic points in a captured image acquired by imaging in one-to-one correspondence, Furthermore, for example, as the technique disclosed in Japanese Patent Application No. 2013-262836, the second correspondence data of the first camera 10a, and the second correspondence data of the second camera 10b can also be generated by using subjects that are placed at different distances.

Moreover, in this example, the generating unit 22 illustrated in FIG. 2 calculates a correction equation (hereinafter, also referred to as "first correction equation") to correct a coordinate position of a captured image (hereinafter, "first captured image") that is obtained by imaging with the first camera 10a to a position close to a target position based on the second correspondence data for the first camera 10a, and generates the first correspondence data (hereinafter, "first correspondence data for the first captured image") in which the first misregistration amount indicating an amount of misregistration that cannot be corrected by correction using the first correction equation is associated with each of blocks that are acquired by dividing the first captured image into sizes of at least one pixel each. Moreover, the generating unit 22 calculates a correction equation (hereinafter, also referred to as "second correction equation") to correct a coordinate position of a captured image (hereinafter, "second captured image") that is obtained by imaging with the second camera 10b to a position close to a target position based on the second correspondence data for the second camera 10b, and generates the first correspondence data (hereinafter, "first correspondence data for the second captured image") in which the first misregistration amount indicating an amount of misregistration that cannot be corrected by correction using the second correction equation is associated with each of blocks that are acquired by dividing the second captured image into sizes of at least one pixel each.

That is, because the generating unit 22 generates the correction equation and the first correspondence data for the first captured image, and generates the correction equation and the first correspondence data for the second captured image, a required capacity in each of the first storage unit 30 that stores the correction parameters indicating coefficients of the correction equation and the second storage unit 40 that stores the first correspondence data is twice as much as those of the embodiment described above.

Furthermore, in this example, the first acquiring unit 23 illustrated in FIG. 2 acquires the first captured image from the first camera 10a and the second captured image from the second camera 10b. Moreover, the second acquiring unit 24 illustrated in FIG. 2 acquires the first correspondence data for the first captured image and the first correspondence data for the second captured image from the second storage unit 40. Furthermore, the third acquiring unit 25 illustrated in FIG. 2 acquires the correction parameters (hereinafter, "first correction parameters") indicating coefficients of the first correction equation and the correction parameters (hereinafter, "second correction parameters") indicating coefficients of the second correction equation from the first storage unit 30.

Moreover, in this example, the correcting unit 26 illustrated in FIG. 2 performs correction of the first captured image by using the first correspondence data for the first captured image and the first correction equation, and also performs correction of the second captured image by using the first correspondence data for the second captured image and the second correction equation. The functions of the respective components of the image-correction processing unit 20 in this example are basically similar to the embodiment described above. In other words, it can be regarded that the camera 10 of the embodiment described above can be configured with either one of cameras included in the stereo camera,

In the present modification, when a captured image (the first captured image or the second captured image) is divided into blocks in the size of 32×32 pixels (32 pixels in the x direction and 32 pixels in the y direction), 1200 blocks are acquired similarly to the embodiment described above. In the first correspondence data, the first misregistration amounts in the x direction and the y direction are associated with each block. In this example, because the first correspondence data for the first captured image and the first correspondence data for the second captured image are prepared, a required capacity in a memory (the second storage unit 40) to hold the first correspondence data is twice as much as that of the embodiment described above.

Thus, in the comparison example in which correction is performed only by using a lookup table, without performing correction using a correction equation, data of 1200× 10×4 = 48000 bits is necessary as the entire lookup table. Therefore, to hold this lookup table, a memory capacity of 48000 bits = 6000 bytes is required.

In contrast to this, in the present modification, data of 1200×5×2×2 = 24000 bits is necessary for the first correspondence data for the first captured image and the first correspondence data for the second captured image together. Therefore, to hold the first correspondence data for the first captured image and the first correspondence data for the second captured image, a memory capacity of 24000 bits = 3000 bytes is required, and it is a half of the comparison example. Moreover, according to the present modification, a reduced amount in a memory capacity (6000 bytes - 3000 bytes = 3000 bytes) can be increased compared to the reduced amount (= 1500 bytes) in the embodiment described above.

According to the modification, because it is necessary to hold the first correspondence data for the first captured image and the first correspondence data for the second captured image, a memory capacity required to hold the first correspondence data increases compared to the embodiment described above; however, the reduced amount in the memory capacity can be increased compared to the first embodiment described above.

Program

A program executed by the image-correction processing unit 20 of the embodiment described above may be configured to be stored in a computer-readable recording medium such as a compact-disc (CD)-ROM, a flexible disk (FD), a compact-disc recordable (CD-R), a digital versatile disk (DVD), and a universal serial bus (USB) memory to be provided, or may be configured to be provided or distributed through a network such as the Internet. Moreover, various kinds of programs may be configured to be installed in advance in a ROM and the like to be provided.

According to the present invention, it is possible to perform misregistration correction of an entire image region at high accuracy, and to reduce a memory capacity used in the misregistration correction.

Although the invention has been described with respect to specific embodiments for a complete and clear disclosure, amendments, modifications and alternative constructions may be made. The invention is defined by the following claims.

**Claims**

1.  An image processing apparatus (20) comprising:

    a first acquiring unit (23) configured to acquire an image;
    a second acquiring unit (24) configured to acquire first misregistration amounts that are respectively associated with a plurality of unit regions acquired by dividing the captured image into sizes of at least one pixel each;
    a third acquiring unit (25) configured to acquire a correction equation to correct a coordinate position in the image; and
    a correcting unit (26) configured to correct the coordinate position based on a second misregistration amount indicating a difference between the coordinate position in the image and a position after correcting the coordinate position by using the correction equation and based on the first misregistration amount that is associated with the unit region that includes the coordinate position;
    the correction equation corrects a coordinate position of the captured image to a position close to a target position by a predetermined polynominal approximation;
    the image processing apparatus (20) further comprising
    a generating unit (22) configured to:
    calculate the correction equation based on second correspondence data containing second correction amounts respectively associated with the coordinate positions in the captured image, the second corresponding data indicating a difference between the coordinate position and a target position indicating an ideal position that does not cause distortion in a captured image, wherein
    the first misregistration amount indicates an amount of misregistration that cannot be corrected by using the correction equation;
    **characterized in that**:

       the unit regions correspond to blocks acquired by dividing a captured image into predetermined sizes;
       the image is captured with a camera (10); and
       the first misregistration amount that is associated with the unit region that includes the coordinate position is either:

          A: a mean value of first misregistration amounts corresponding to respective coordinate positions of the pixels included in the unit region; or
          B: a misregistration amount acquired by performing linear interpolation according to distances between the coordinate position and the vertex positions of one to four vertexes in the unit region that are close to the coordinate position.

2.  The image processing apparatus (20) according to claim 1, wherein
    a size of the unit region is a size that includes a plurality of pixels.

3.  The image processing apparatus (20) according to claim 1 or 2, wherein
    the correcting unit (26) calculates a first correction amount to correct the coordinate position by adding the second misregistration amount that corresponds to the coordinate position in the captured image and the first misregistration amount that is associated with the unit region that includes the coordinate position.

4. The image processing apparatus (20) according to any one of claims 1 to 3, wherein the camera (10) is either one of a plurality of cameras included in a stereo camera.

5. A system (1) comprising:

   a camera (10); and
   the image processing apparatus (20) as claimed in any one of claims 1 to 4.

6. An image processing method comprising:

   acquiring an image;
   acquiring first misregistration amounts that are respectively associated with a plurality of unit regions acquired by dividing the captured image into sizes of at least one pixel each;
   acquiring a correction equation to correct a coordinate position in the image; and
   correcting the coordinate position based on a second misregistration amount indicating a difference between the coordinate position in the image and a position after correcting the coordinate position by using the correction equation and based on the first misregistration amount that is associated with the unit region that includes the coordinate position;
   the correction equation corrects a coordinate position of the captured image to a position close to a target position by a predetermined polynominal approximation;
   the correction equation is calculated based on second correspondence data containing second correction amounts respectively associated with the coordinate positions in the captured image, the second corresponding data indicating a difference between the coordinate position and a target position indicating an ideal position that does not cause distortion in a captured image, wherein
   the first misregistration amount indicates an amount of misregistration that cannot be corrected by using the correction equation;
   **characterized in that**:

      the unit regions correspond to blocks acquired by dividing a captured image into predetermined sizes;
      the image is captured with a camera (10); and
      the first misregistration amount that is associated with the unit region that includes the coordinate position is either:

         A: a mean value of first misregistration amounts corresponding to respective coordinate positions of the pixels included in the unit region; or
         B: a misregistration amount acquired by performing linear interpolation according to distances between the coordinate position and the vertex positions of one to four vertexes in the unit region that are close to the coordinate position.

7. A computer-readable storage medium with an executable program stored thereon, wherein the program instructs a computer to execute:

   acquiring an image;
   acquiring first misregistration amounts that are respectively associated with a plurality of unit regions acquired by dividing the captured image into sizes of at least one pixel each;
   acquiring a correction equation to correct a coordinate position in the image; and
   correcting the coordinate position based on a second misregistration amount indicating a difference between the coordinate position in the image and a position after correcting the coordinate position by using the correction equation and based on the first misregistration amount that is associated with the unit region that includes the coordinate position;
   the correction equation corrects a coordinate position of the captured image to a position close to a target position by a predetermined polynominal approximation;
   the correction equation is calculated based on second correspondence data containing second correction amounts respectively associated with the coordinate positions in the captured image, the second corresponding data indicating a difference between the coordinate position and a target position indicating an ideal position that does not cause distortion in a captured image, wherein
   the first misregistration amount indicates an amount of misregistration that cannot be corrected by using the correction equation;

**characterized in that**:

the unit regions correspond to blocks acquired by dividing a captured image into predetermined sizes;
the image is captured with a camera (10); and
the first misregistration amount that is associated with the unit region that includes the coordinate position is either:

A: a mean value of first misregistration amounts corresponding to respective coordinate positions of the pixels included in the unit region; or
B: a misregistration amount acquired by performing linear interpolation according to distances between the coordinate position and the vertex positions of one to four vertexes in the unit region that are close to the coordinate position.

**Patentansprüche**

1.  Bildverarbeitungsvorrichtung (20), die umfasst:

eine erste Erfassungseinheit (23), die konfiguriert ist, ein Bild zu erfassen;
eine zweite Erfassungseinheit (24), die konfiguriert ist, erste Deckungsfehlerbeträge zu erfassen, die jeweils mehreren Einheitsbereichen zugeordnet sind, die durch Unterteilen des aufgenommenen Bildes in Größen von jeweils mindestens einem Pixel erfasst werden;
eine dritte Erfassungseinheit (25), die konfiguriert ist, eine Korrekturgleichung zu erfassen, um eine Koordinatenposition in dem Bild zu korrigieren; und
eine Korrektureinheit (26), die konfiguriert ist, die Koordinatenposition anhand eines zweiten Deckungsfehlerbetrags, der einen Unterschied zwischen der Koordinatenposition in dem Bild und einer Position nach dem Korrigieren der Koordinatenposition durch Verwenden der Korrekturgleichung angibt, und anhand des ersten Deckungsfehlerbetrags, der dem Einheitsbereich zugeordnet ist, der die Koordinatenposition enthält, zu korrigieren;
wobei die Korrekturgleichung eine Koordinatenposition des aufgenommenen Bildes zu einer Position in der Nähe einer Zielposition durch eine vorbestimmte Polynomannäherung korrigiert;
wobei die Bildverarbeitungsvorrichtung (20) ferner umfasst:

eine Erzeugungseinheit (22), die konfiguriert ist zum:
Berechnen der Korrekturgleichung anhand zweiter Übereinstimmungsdaten, die zweite Korrekturbeträge enthalten, die jeweils den Koordinatenpositionen in dem aufgenommenen Bild zugeordnet sind, wobei die zweiten Übereinstimmungsdaten einen Unterschied zwischen der Koordinatenposition und einer Zielposition, die eine ideale Position angibt, die keine Verzerrung in einem aufgenommen Bild verursacht, angeben, wobei
der erste Deckungsfehlerbetrag einen Betrag eines Deckungsfehlers angibt, der nicht durch Verwenden der Korrekturgleichung korrigiert werden kann;
**dadurch gekennzeichnet, dass**:

die Einheitsbereiche Blöcken entsprechen, die durch Unterteilen eines aufgenommen Bildes in vorbestimmte Größen erfasst werden;
wobei das Bild mit einer Kamera (10) aufgenommen wird; und
wobei der erste Deckungsfehlerbetrag, der dem Einheitsbereich zugeordnet ist, der die Koordinatenposition enthält, entweder:

A: ein Mittelwert erster Deckungsfehlerbeträge ist, die jeweiligen Koordinatenpositionen der Pixel, die in dem Einheitsbereich enthalten sind, entsprechen; oder
B: ein Deckungsfehlerbetrag ist, der durch Ausführen einer linearen Interpolation gemäß den Abständen zwischen der Koordinatenposition und den Eckpositionen von einem bis vier Eckpunkten in dem Einheitsbereich, die in der Nähe der Koordinatenposition sind, erfasst wird.

2.  Bildverarbeitungsvorrichtung (20) nach Anspruch 1, wobei
eine Größe des Einheitsbereichs eine Größe ist, die mehrere Pixel enthält.

3. Bildverarbeitungsvorrichtung (20) nach Anspruch 1 oder 2, wobei
die Korrektureinheit (26) einen ersten Korrekturbetrag, um die Koordinatenposition zu korrigieren, durch Addieren des zweiten Deckungsfehlerbetrags, der der Koordinatenposition in dem aufgenommenen Bild entspricht, und des ersten Deckungsfehlerbetrags, der dem Einheitsbereich zugeordnet ist, der die Koordinatenposition enthält, berechnet.

4. Bildverarbeitungsvorrichtung (20) nach einem der Ansprüche 1 bis 3, wobei
die Kamera (10) eine von mehreren Kameras ist, die in einer Stereokamera enthalten sind.

5. System (1), das Folgendes umfasst:

    eine Kamera (10); und
    die Bildverarbeitungsvorrichtung (20) nach einem der Ansprüche 1 bis 4.

6. Bildverarbeitungsverfahren, das Folgendes umfasst:

    Erfassen eines Bildes;
    Erfassen erster Deckungsfehlerbeträge, die jeweils mehreren Einheitsbereichen zugeordnet sind, die durch Unterteilen des aufgenommenen Bildes in Größen von jeweils mindestens einem Pixel erfasst werden;
    Erfassen einer Korrekturgleichung, um eine Koordinatenposition in dem Bild zu korrigieren; und
    Korrigieren der Koordinatenposition anhand eines zweiten Deckungsfehlerbetrags, der einen Unterschied zwischen der Koordinatenposition in dem Bild und einer Position nach dem Korrigieren der Koordinatenposition durch Verwenden der Korrekturgleichung angibt, und anhand des ersten Deckungsfehlerbetrags, der dem Einheitsbereich zugeordnet ist, der die Koordinatenposition enthält;
    wobei die Korrekturgleichung eine Koordinatenposition des aufgenommenen Bildes zu einer Position in der Nähe einer Zielposition durch eine vorbestimmte Polynomannäherung korrigiert;
    wobei die Korrekturgleichung anhand zweiter Übereinstimmungsdaten berechnet wird, die zweite Korrekturbeträge enthalten, die jeweils den Koordinatenpositionen in dem aufgenommenen Bild zugeordnet sind, wobei die zweiten Übereinstimmungsdaten einen Unterschied zwischen der Koordinatenposition und einer Zielposition, die eine ideale Position angibt, die keine Verzerrung in einem aufgenommen Bild verursacht, angeben, wobei
    der erste Deckungsfehlerbetrag einen Betrag eines Deckungsfehlers angibt, der nicht durch Verwenden der Korrekturgleichung korrigiert werden kann;
    **dadurch gekennzeichnet, dass**:

        die Einheitsbereiche Blöcken entsprechen, die durch Unterteilen eines aufgenommenen Bildes in vorbestimmte Größen erfasst werden;
        wobei das Bild mit einer Kamera (10) aufgenommen wird; und
        der erste Deckungsfehlerbetrag, der dem Einheitsbereich zugeordnet ist, der die Koordinatenposition enthält, entweder

            A: ein Mittelwert erster Deckungsfehlerbeträge ist, die jeweiligen Koordinatenpositionen der Pixel entsprechen, die in dem Einheitsbereich enthalten sind; oder
            B: ein Deckungsfehlerbetrag ist, der durch Ausführen einer linearen Interpolation gemäß den Abständen zwischen der Koordinatenposition und den Eckpositionen von einem bis vier Eckpunkten in dem Einheitsbereich, die in der Nähe der Koordinatenposition sind, erfasst wird.

7. Computerlesbares Speichermedium mit einem auf ihm gespeicherten ausführbaren Programm, wobei das Programm einen Computer anweist, Folgendes auszuführen:

    Erfassen eines Bildes;
    Erfassen erster Deckungsfehlerbeträge, die jeweils mehreren Einheitsbereichen zugeordnet sind, die durch Unterteilen des aufgenommenen Bildes in Größen von jeweils mindestens einem Pixel erfasst werden;
    Erfassen einer Korrekturgleichung, um eine Koordinatenposition in dem Bild zu korrigieren; und
    Korrigieren der Koordinatenposition anhand eines zweiten Deckungsfehlerbetrags, der einen Unterschied zwischen der Koordinatenposition in dem Bild und einer Position nach dem Korrigieren der Koordinatenposition durch Verwenden der Korrekturgleichung angibt, und anhand des ersten Deckungsfehlerbetrags, der dem Einheitsbereich zugeordnet ist, der die Koordinatenposition enthält;

wobei die Korrekturgleichung eine Koordinatenposition des aufgenommenen Bildes zu einer Position in der Nähe einer Zielposition durch eine vorbestimmte Polynomannäherung korrigiert;

wobei die Korrekturgleichung anhand zweiter Übereinstimmungsdaten berechnet wird, die zweite Korrekturbeträge enthalten, die jeweils den Koordinatenpositionen in dem aufgenommenen Bild zugeordnet sind, wobei die zweiten Übereinstimmungsdaten einen Unterschied zwischen der Koordinatenposition und einer Zielposition, die eine ideale Position angibt, die keine Verzerrung in einem aufgenommen Bild verursacht, angeben, wobei

der erste Deckungsfehlerbetrag einen Betrag eines Deckungsfehlers angibt, der nicht durch Verwenden der Korrekturgleichung korrigiert werden kann;

**dadurch gekennzeichnet, dass**:

die Einheitsbereiche Blöcken entsprechen, die durch Unterteilen eines aufgenommenen Bildes in vorbestimmte Größen erfasst werden;

wobei das Bild mit einer Kamera (10) aufgenommen wird; und

der erste Deckungsfehlerbetrag, der dem Einheitsbereich zugeordnet ist, der die Koordinatenposition enthält, entweder:

A: ein Mittelwert erster Deckungsfehlerbeträge ist, die jeweiligen Koordinatenpositionen der Pixel entsprechen, die in dem Einheitsbereich enthalten sind; oder

B: ein Deckungsfehlerbetrag ist, der durch Ausführen einer linearen Interpolation gemäß den Abständen zwischen der Koordinatenposition und den Eckpositionen von einem bis vier Eckpunkten in dem Einheitsbereich, die in der Nähe der Koordinatenposition sind, erfasst wird.

## Revendications

1.  Appareil de traitement d'image (20) comprenant :

    une première unité d'acquisition (23) conçue pour acquérir une image ;

    une deuxième unité d'acquisition (24) conçue pour acquérir de premières quantités d'erreurs d'enregistrement qui sont respectivement associées à une pluralité de régions unitaires acquises par la division de l'image capturée en dimensions d'au moins un pixel chacune ;

    une troisième unité d'acquisition (25) conçue pour acquérir une équation de correction pour corriger une position de coordonnées dans l'image ; et

    une unité de correction (26) conçue pour corriger la position de coordonnées en fonction d'une deuxième quantité d'erreurs indiquant une différence entre la position de coordonnées dans l'image et une position après la correction de la position de coordonnées à l'aide de l'équation de correction et en fonction de la première quantité d'erreurs d'enregistrement qui est associée à la région unitaire qui comprend la position de coordonnées ;

    l'équation de correction corrigeant une position de coordonnées de l'image capturée pour obtenir une position proche d'une position cible par une approximation de polynôme prédéterminée ;

    l'appareil de traitement d'image (20) comprenant en outre

    une unité de génération (22) conçue pour :

    calculer l'équation de correction en fonction de deuxièmes données de correspondance contenant des deuxièmes quantités de corrections respectivement associées aux positions de coordonnées dans l'image capturée, les deuxièmes données correspondantes indiquant une différence entre la position de coordonnées et une position cible indiquant une position idéale qui n'entraîne pas de distorsion dans une image capturée,

    la première quantité d'erreurs d'enregistrement indiquant une quantité d'erreurs d'enregistrement qui ne peuvent pas être corrigées à l'aide de l'équation de correction ;

    **caractérisé en ce que** :

    les régions unitaires correspondent à des blocs obtenus par la division d'une image capturée en dimensions prédéterminées ;

    l'image est capturée avec un appareil de prise de vues (10) ; et

    la première quantité d'erreurs d'enregistrement qui est associée à la région unitaire qui comprend la position de coordonnées est soit :

A : une valeur moyenne de premières quantités d'erreurs d'enregistrement correspondant à des positions de coordonnées respectives des pixels compris dans la région unitaire ; ou

B : une quantité d'erreurs d'enregistrement obtenue par la réalisation d'une interpolation linéaire en fonction de distances entre la position de coordonnées et les points culminants d'un des quatre sommets dans la région unitaire qui sont proches de la position de coordonnées.

2. Appareil de traitement d'image (20) selon la revendication 1, dans lequel
une dimension de la région unitaire est une dimension qui comprend une pluralité de pixels.

3. Appareil de traitement d'image (20) selon la revendication 1 ou 2, dans lequel
l'unité de correction (26) calcule une première quantité de corrections pour corriger la position de coordonnée par l'ajout de la deuxième quantité d'erreurs d'enregistrement qui correspond à la position de coordonnées dans l'image capturée et la première quantité d'erreurs d'enregistrement qui est associée à la région unitaire qui comprend la position de coordonnées.

4. Appareil de traitement d'image (20) selon l'une quelconque des revendications 1 à 3, dans lequel
l'appareil de prise de vues (10) est l'un d'une pluralité d'appareils de prise de vues comprises dans une caméra stéréoscopique.

5. Système (1) comprenant :

   un appareil de prise de vues (10) ; et
   l'appareil de traitement d'image (20) tel que défini dans l'une quelconque des revendications 1 à 4.

6. Procédé de traitement d'image comprenant :

   l'acquisition d'une image ;
   l'acquisition de premières quantités d'erreurs d'enregistrement qui sont respectivement associées à une pluralité de régions unitaires obtenues par la division de l'image capturée en dimensions d'au moins un pixel chacune ;
   l'acquisition d'une équation de correction pour corriger une position de coordonnées dans l'image ; et
   la correction de la position de coordonnées en fonction d'une deuxième quantité d'erreurs d'enregistrement indiquant une différence entre la position de position de coordonnées dans l'image et une position après la correction de la position de coordonnées à l'aide de l'équation de correction et en fonction de la première quantité d'erreurs d'enregistrement qui est associée à la région unitaire qui comprend la position de coordonnées ;
   l'équation de correction corrigeant une position de coordonnées de l'image capturée pour obtenir une position proche d'une position cible par une approximation de polynôme prédéterminée ;
   l'équation de correction étant calculée en fonction de deuxièmes données de correspondance contenant des deuxièmes quantités de corrections respectivement associées aux positions de coordonnées dans l'image capturée, les deuxièmes données correspondantes indiquant une différence entre la position de coordonnées et une position cible indiquant une position idéale qui n'entraîne pas de distorsion dans une image capturée, la première quantité d'erreurs d'enregistrement indiquant une quantité d'erreurs d'enregistrement qui ne peuvent pas être corrigées à l'aide de l'équation de correction ;

   **caractérisé en ce que** :
   les régions unitaires correspondent à des blocs obtenus par la division d'une image capturée en dimensions prédéterminées ;

   l'image est capturée avec un appareil de prise de vues (10) ; et
   la première quantité d'erreurs d'enregistrement qui est associée à la région unitaire qui comprend la position de coordonnées est soit :

   A : une valeur moyenne de premières quantités d'erreurs d'enregistrement correspondant à des positions de coordonnées respectives des pixels compris dans la région unitaire ; ou
   B : une quantité d'erreurs d'enregistrement obtenue par la réalisation d'une interpolation linéaire en fonction de distances entre la position de coordonnées et les points culminants d'un des quatre sommets dans la région unitaire qui est proche de la position de coordonnées.

7. Support de stockage lisible par ordinateur comportant un programme exécutable stocké sur celui-ci, dans lequel le programme donne l'instruction à un ordinateur d'exécuter :

l'acquisition d'une image ;

l'acquisition de premières quantités d'erreurs d'enregistrement qui sont respectivement associées à une pluralité de régions unitaires obtenues par la division de l'image capturée en dimensions d'au moins un pixel chacune ;

l'acquisition d'une équation de correction pour corriger une position de coordonnées dans l'image ; et

la correction de la position de coordonnées en fonction d'une deuxième quantité d'erreurs d'enregistrement indiquant une différence entre la position de coordonnées dans l'image et une position après la correction de la position de coordonnées à l'aide de l'équation de correction et en fonction de la première quantité d'erreurs d'enregistrement qui est associée à la région unitaire qui comprend la position de coordonnées ;

l'équation de correction corrigeant une position de coordonnées de l'image capturée pour obtenir une position proche d'une position cible par une approximation de polynôme prédéterminée ;

l'équation de correction étant calculée en fonction de deuxièmes données de correspondance contenant des deuxièmes quantités de corrections respectivement associées aux positions de coordonnées dans l'image capturée, les deuxièmes données correspondantes indiquant une différence entre la position de coordonnées et une position cible indiquant une position idéale qui n'entraîne pas de distorsion dans une image capturée, la première quantité d'erreurs d'enregistrement indiquant une quantité d'erreurs d'enregistrement qui ne peuvent pas être corrigées à l'aide de l'équation de correction ;

**caractérisé en ce que** :

les régions unitaires correspondent à des blocs obtenus par la division d'une image capturée en dimensions prédéterminées ;

l'image est capturée avec un appareil de prise de vues (10) ; et

la première quantité d'erreurs d'enregistrement qui est associée à la région unitaire qui comprend la position de coordonnées est soit :

A : une valeur moyenne de premières quantités d'erreurs d'enregistrement correspondant à des positions de coordonnées respectives des pixels compris dans la région unitaire ; ou

B : une quantité d'erreurs d'enregistrement obtenue par la réalisation d'une interpolation linéaire en fonction de distances entre la position de coordonnées et les points culminants d'un des quatre sommets dans la région unitaire qui sont proches de la position de coordonnées.

# FIG.1

1

10
CAMERA

30
FIRST STORAGE UNIT

20
IMAGE-CORRECTION PROCESSING UNIT

40
SECOND STORAGE UNIT

(IMAGE AFTER CORRECTION)

# FIG.2

20

21
THIRD STORAGE UNIT

22
GENERATING UNIT

23
FIRST ACQUIRING UNIT

24
SECOND ACQUIRING UNIT

25
THIRD ACQUIRING UNIT

26
CORRECTING UNIT

27
OUTPUT UNIT

# FIG.3

| No. | x | y | dx | dy |
|-----|------|------|------|------|
| 1 | -500 | -100 | 0.1 | 0.2 |
| 2 | 1 | 2 | 0.1 | 0.1 |
| 3 | 1 | 6 | 0.05 | 0.12 |
| 4 | 3 | 4 | 0.03 | 0.09 |
| 5 | 6 | 5 | 0.15 | 0.24 |
| 6 | 300 | 60 | 0.14 | 0.2 |
| ⋮ | ⋮ | ⋮ | ⋮ | ⋮ |

# FIG.4

# FIG.5

START

ACQUIRE SECOND
CORRESPONDENCE DATA ~S1

CALCULATE CORRECTION
EQUATION ~S2

GENERATE FIRST
CORRESPONDENCE DATA ~S3

END

# FIG.6

# FIG.7

# FIG.8

ONE COORDINATE POSITION

LUT VALUE (1)  LUT VALUE (2)

m

1-m

COORDINATES
(100, 100)

n  1-n

LUT VALUE (3)  LUT VALUE (4)

# FIG.9

LUT VALUE (1)  LUT VALUE (2)

ONE
COORDINATE
POSITION

LUT VALUE (3)  LUT VALUE (4)

# FIG.10

LUT VALUE (1)    LUT VALUE (2)

m

ONE
COORDINATE
POSITION

1-m

LUT VALUE (3)    LUT VALUE (4)

# FIG.11

1

100

10a    20    30

IMAGE-CORRECTION
PROCESSING UNIT

FIRST
STORAGE
UNIT

B

10b    40

SECOND
STORAGE
UNIT

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005292080 A
- US 2013004059 A1
- JP 2013262836 A

**Non-patent literature cited in the description**

- THREE-DIMENSIONAL ELASTIC MATCHING OF VOLUMES. **MOSHFEGHI M et al.** IEEE TRANSACTIONS ON IMAGE PROCESSING. IEEE SERVICE CENTER, 01 March 1994, vol. 3, 128-138
- REGISTRATION OF LOCALLY DISTORTED IMAGES BY MULTIWINDOW PATTERN MATCHING AND DISPLACEMENT INTERPOLATION: THE PROPOSAL OF AN ALOGORITHM AND ITS APPLICATION TO DIGITAL SUBTRACTION ANGIOGRAPHY. **YANAGISAWA M et al.** PROCEEDINGS OF THE CONFERENCE ON PATTERN RECOGNITION. IEEE. COMP. SOC PRESS, 1288-1291